# EUROPEAN PATENT SPECIFICATION

(11) **EP 4 389 252 B1**
(45) Date of publication and mention of the grant of the patent: **03.09.2025**
(21) Application number: 23216868.2
(22) Date of filing: 14.12.2023
(51) Int. Cl.: B01D 29/23, B01D 35/30, B01D 46/00, B01D 46/24

(54) **FILTER ELEMENT WITH CONVERTIBLE END CAP AND METHODS**
FILTERELEMENT MIT UMWANDELBARER ENDKAPPE UND VERFAHREN
ÉLÉMENT FILTRANT AVEC CAPUCHON D'EXTRÉMITÉ CONVERTIBLE ET PROCÉDÉS

(30) Priority: 22.12.2022 US 202263434730 P
(43) Date of publication of application: 26.06.2024
(73) Proprietor: Donaldson Company, Inc., Bloomington, MN 55431 (US)
(72) Inventor: OEZKAN, Buesra Ucak, Cologne (DE); ELROD, Mark J., Bloomington (US); MARCKS, Colter A., Hager City (US); HONG, Peter M., Rosemount (US); STENZEL, Dezeray A., Minneapolis (US)
(74) Representative: Eisenführ Speiser

(56) References cited:
- WO-A1-01/26774
- US-A- 4 105 562
- US-A- 4 228 012
- US-A1- 2005 205 484
- US-A1- 2021 260 506

## Description

### Technical Field

This disclosure concerns end caps and filter elements for use in liquid, air, and steam filtration. In particular, this disclosure concerns filter elements having end caps that can be convertible to/from flat and tapered, and methods of use.

### Background

Many filter assemblies include a reusable housing holding a filter element or cartridge. Typical filter elements are an elongated cylinder of filter media, often pleated media, with fluid flowing either from the outside through the filter media to a central collection tube, or vice versa. One end is capped with a solid or impermeable end cap and the other end is typically open and attached by O-rings, threads or other such devices to a fluid port of the housing to allow the fluid to either flow to or from the filter element.

In some systems, the closed end cap may have a tapered projection extending away from the rest of the filter element. This tapered projection functions to maintain the alignment of the filter element in the housing during use.

In some systems, the closed end cap may be generally flat. In many systems, there are uses for filter elements with end caps having the tapered projection, as well as uses for filter elements with flat end caps. This means that a user of such a product must order and maintain the correct inventory of filters with the appropriate configuration. WO 01/26774 A1 teaches a detachable alignment fin to be mounted to one end of the cartridge and optionally to use a flat cap attachment. US 2021/0260506 A1 suggests an interchangeable mechanism using snap tooth locks for exchanging different types of end caps. US 4 228 012 A discloses an end cap coupler system for linking filter cartridges. Linking filter elements are also known from US 4 105 562 A, whereby filter elements are threadably mating in metal-to-metal sealing engagement. Similarly, mating filter elements at their fist, respectively second end plate are also disclosed in US 2005/0205484 A1.

These types of filters are often used in the processed food and beverage industry. As such, hygienic factors (clean and sanitary), including the seals and connections used within the filters, are prime considerations.

Improvements in these types of filter assemblies are desirable.

### Summary

A filter element is provided that improves the prior art.

In general, a filter element is provided comprising: (a) filter media having opposite first and second ends; and (b) an end cap arrangement secured to the first end selectively convertible from a tapered end cap to a flat end cap, and from the flat end cap to the tapered end cap.

The end cap arrangement includes a first end cap secured to the first end; and further including a second end cap secured to the second end.

The end cap arrangement includes the flat end cap secured to the first end cap, and the tapered end cap releasably coupled to the flat end cap.

The filter media includes a cylindrical tube having a central longitudinal axis; and (b) the flat end cap includes a flat, planar surface, perpendicular to the longitudinal axis; and a flat end cap radial wall extending from a perimeter of the planar surface toward the first end cap.

In one or more embodiments, the flat end cap includes an end lip surrounding the flat end cap radial wall such that the flat end cap radial wall extends between the planar surface and the end lip.

In some arrangements, the flat end cap further includes a base plate with an outer periphery; the end lip and flat end cap radial wall projecting away from the base plate; and the base plate is secured to and against the first end cap.

The tapered end cap according to the invention includes a radial wall member surrounding an end piece; the end piece having a tapered projection.

In some examples, the tapered projection is one of a fin, cone, cone-section, or rocket-shape.

One or more embodiments include: (a) the flat end cap radial wall has an exterior surface; (b) the radial wall member of the tapered end cap has an interior surface; and (c) the tapered end cap is releasably coupled to the flat end cap by a coupling arrangement between the exterior surface of the flat end cap radial wall and the interior surface of the tapered end cap.

The coupling arrangement may include a threaded connection.

In some examples, the coupling arrangement includes a lug and a holder engageable upon rotation of the threaded connection.

In one or more embodiments, the lug includes a projection extending from one of the interior surface of the radial wall member and the exterior surface of the flat end cap radial wall; and the holder extends from the other of the interior surface of the radial wall member and the exterior surface of the flat end cap radial wall.

In examples, the lug projects radially inwardly from the interior surface of the radial wall member; and the holder is along the exterior surface of the flat end cap radial wall.

In some embodiments, the lug is projects radially inwardly from adjacent an end rim of the interior surface of the radial wall member; and the holder projects radially outwardly from the end lip and the flat end cap radial wall.

In example arrangements, the lug is an axial projection along the interior surface of the radial wall member; and the holder is along the exterior surface of the flat end cap radial wall.

In one or more embodiments, the threaded connection includes threads along the radial wall member between the lug and an end rim of the interior surface of the radial wall member; and the holder extends from the flat end cap radial wall adjacent to the flat planar surface and includes threads along the flat end cap radial wall between the holder and the base plate.

The holder can include a recess in the flat end cap radial wall, in some embodiments.

In example arrangements, the coupling arrangement includes a plurality of lugs and holders.

In one or more embodiments, the tapered end cap further includes a sealing member at a terminal end of the tapered end cap radial wall member; the sealing member being flexible and positioned to press against the end lip of the flat end cap to form a seal therebetween.

In some embodiments, the tapered end cap further includes a seal tip at a terminal end of the tapered end cap radial wall member; the seal tip being a rubber-like material and positioned to press against the end lip of the flat end cap to form a seal therebetween.

In examples, the tapered end cap includes a tapered projection being one of a fin, cone, cone-section, or rocket-shape.

In some arrangements, the filter media includes a cylindrical tube having a central longitudinal axis; and the flat end cap includes a flat, planar surface, perpendicular to the longitudinal axis; and a flat end cap rim extending from a perimeter of the planar surface away from the first end cap.

In examples, the flat end cap rim includes a plurality of rim segments circumferentially spaced from each other with recesses therebetween.

In some embodiments, the tapered end cap includes a radial wall member surrounding an end piece; the end piece having a tapered projection.

The tapered projection can be one of a fin, cone, cone-section, or rocket-shape.

The tapered end cap may further include a plurality of circumferentially spaced connecting sections extending between the tapered projection and the tapered end cap radial wall member.

The tapered end cap radial wall member can be sized to snap fit over the flat end cap rim.

In some examples, the tapered end cap radial wall member has a radially inward protuberance; and the flat end cap rim has a radially outward projection; wherein the radially inward protuberance snaps over the radially outward projection.

In another aspect, a method of converting an end cap arrangement on a filter element is provided. The method includes (a) providing a filter element having filter media with opposite first and second ends; and an end cap arrangement secured to the first end; and (b)
selectively converting the end cap arrangement from a tapered end cap to a flat end cap, and from the flat end cap to the tapered end cap.

In some examples, the step of selectively converting includes releasably coupling the tapered end cap to the flat end cap.

In some examples, the step of selectively converting includes using a threaded connection between the tapered end cap and flat end cap.

In some examples, the step of selectively converting includes using a lug and a holder engageable upon rotation of the threaded connection.

Some example methods further include forming a seal between the tapered end cap and flat end cap.

In some examples, the step of selectively converting includes using a snap-fit connection between the tapered end cap and flat end cap.

It is noted that not all of the specific features described herein need to be incorporated in an arrangement for the arrangement to have some selected advantage according to the present disclosure.

### BRIEF DESCRIPTION OF THE DRAWINGS

FIG. 1 is a schematic illustration showing a type of filter element having a convertible end cap, made in accordance with principles of this disclosure;
FIG. 2 is a perspective view of an embodiment of an end cap arrangement usable with the filter element of FIG. 1, made in accordance with principles of this disclosure, the end cap arrangement including a flat end cap releasably secured to a tapered end cap;
FIG. 3 is a bottom perspective view of the tapered end cap of FIG. 2;
FIG. 4 is a top perspective view of the flat end cap of FIG. 2;
FIG. 5 is a partial perspective view illustrating how the tapered end cap of FIG. 3 and flat end cap of FIG. 4 releasably connect to each other;
FIG. 6 is partial perspective view of internal components illustrating the tapered end cap and flat end cap of FIG. 5 connected to each other;
FIG. 7 is a top plan view of the end cap arrangement of FIG. 2;
FIG. 8 is a cross-sectional view of the end cap arrangement of FIG. 2, the cross-section being taken along the line A-A of FIG. 7;
FIG. 9 is an enlarged perspective, cross-sectional view of engagement between a sealing member on the tapered end cap of FIG. 3 against the flat end cap of FIG. 4;
FIG. 10 is a cross-sectional view of an alternative embodiment of engagement between the tapered end cap and the flat end cap;
FIG. 11 is a perspective view of another embodiment of an end cap arrangement usable with the filter element of FIG. 1, made in accordance with principles of this disclosure, the end cap arrangement including a flat end cap releasably secured to a tapered end cap;
FIG. 12 is a perspective view of the flat end cap used in FIG. 11;
FIG. 13 is a perspective view of the tapered end cap used in FIG. 11;
FIG. 14 is top plan view of the end cap arrangement of FIG. 11;
FIG. 15 is a cross-sectional view of the end cap arrangement of FIG. 11, the cross-section being taken along the line A-A of FIG. 14;
FIG. 16 is a perspective view of a filter assembly, including a housing and a base, usable with the filter element of FIG. 1;
FIG. 17 is a perspective view of another embodiment of a tapered end cap;
FIG. 18 is an enlarged view of a holder on the tapered end cap of FIG. 17;
FIG. 19 is a perspective view of an embodiment of a flat end cap useable with the tapered end cap of FIG. 17;
FIG. 20 is an enlarged view of a lug on the flat end cap of FIG. 19;
FIG. 21 is a perspective view of another embodiment of a tapered end cap;
FIG. 22 is an enlarged view of a holder on the tapered end cap of FIG. 21;
FIG. 23 is a perspective view of an embodiment of a flat end cap useable with the tapered end cap of FIG. 21; and
FIG. 24 is an enlarged view of a lug on the flat end cap of FIG. 23.

### Detailed Description

### Example filter assembly

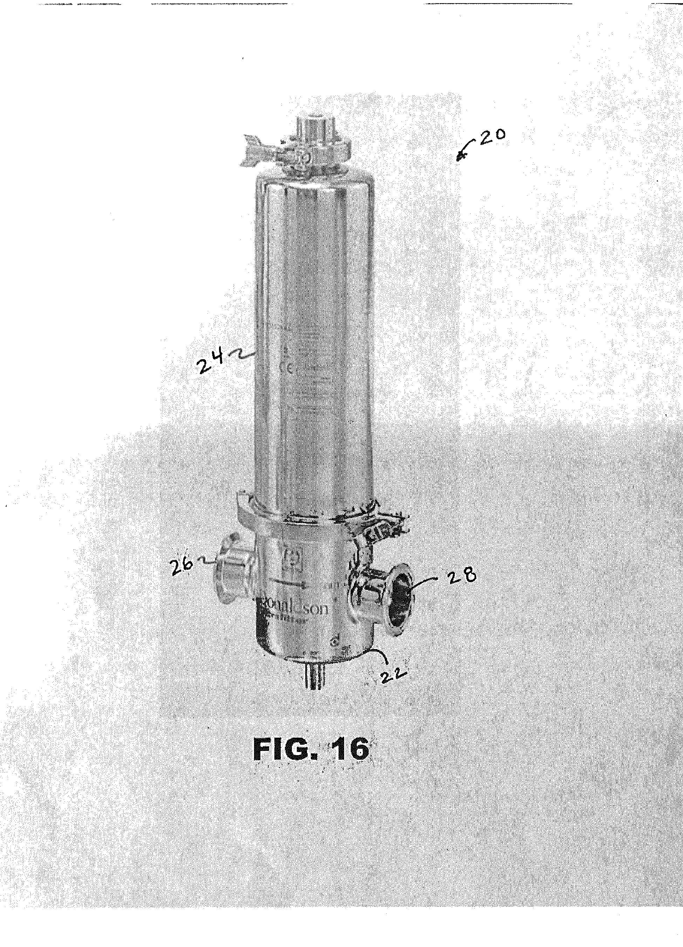

The reference numeral 20, FIG. 16, generally indicates a filter assembly according to the present disclosure. The assembly 20 includes a filter base 22 to which a filter housing 24 is releasably secured. The filter assembly 20 is usable to filter fluid, including liquid, air, and steam.

Referring to FIG. 16 generally the filter base 22 includes a fluid flow inlet 26 and a fluid flow outlet 28. During operation, fluid to be filtered enters the filter base 22 via inlet 26. It is directed into the filter housing 24, for filtering. Filtered fluid is then returned to filter base 22 and exits from the filter assembly 20 through the fluid outlet 28. Filter assembly 20 can be configured for installation and use in a variety of applications including, for example, the processed food and beverage industry. Many applications are possible.

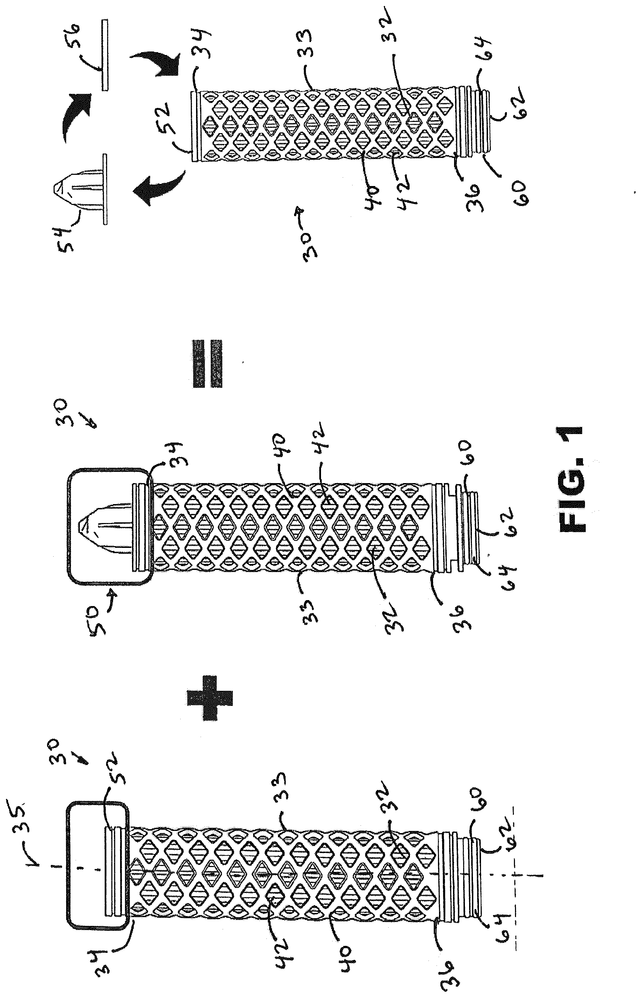

Referring to FIG. 1, the filter assembly 20 further includes an internally received filter element 30. It is noted that the element is a service part, i.e. it is removable and replaceable within the interior of the housing 24.

The filter element 30 includes filter media 32. The filter media 32 can be in the form of a cylinder 33 with an open interior. The cylinder 33 of filter media 32 has a central, longitudinal axis 35, extending between a first end 34 and second end 36. The filter media 32 illustrated is pleated media 38. The pleated media 38 can be many different types of media including cellulose, or blends, or polypropylene microfiber media with a graded pore structure, for example.

Surrounding the outer surface of the filter media 32 is a rigid support cage 40. The cage 40 includes porous openings 42, shown here as diamond shapes or triangulations. The cage 40 resists forces that can break or weaken the element 30, and also better withstands pressure differential across the filter during high volumes of fluid processing.

At the first end 34 of the filter element 30 is an end cap arrangement 50 including a first end cap 52 secured to the first end 34. The end cap arrangement 50 is selectively convertible from a tapered end cap 54 to a flat end cap 56, and from the flat end cap 56 to the tapered end cap 54. Example end cap arrangements 50 are discussed in detail below.

At the second end 36 of the filter element 30 is a second end cap 60 secured to the second end 36. In the example shown, the second end cap 60 is an open end cap 62. The second end cap 62 typically releasably attaches to the filter base 22, and can include one or more seal members 64 to form a seal with the filter base 22.

During operation, fluid to be filtered enters the filter base 22 via inlet 26. It is directed into the interior of the cylinder of the filter element 30, passes through the filter media 32 where it is filtered. The filtered fluid flows into the space between the cage 40 and the filter housing 24, and is then returned to filter base 22 and exits from the filter assembly 20 through the fluid outlet 28.

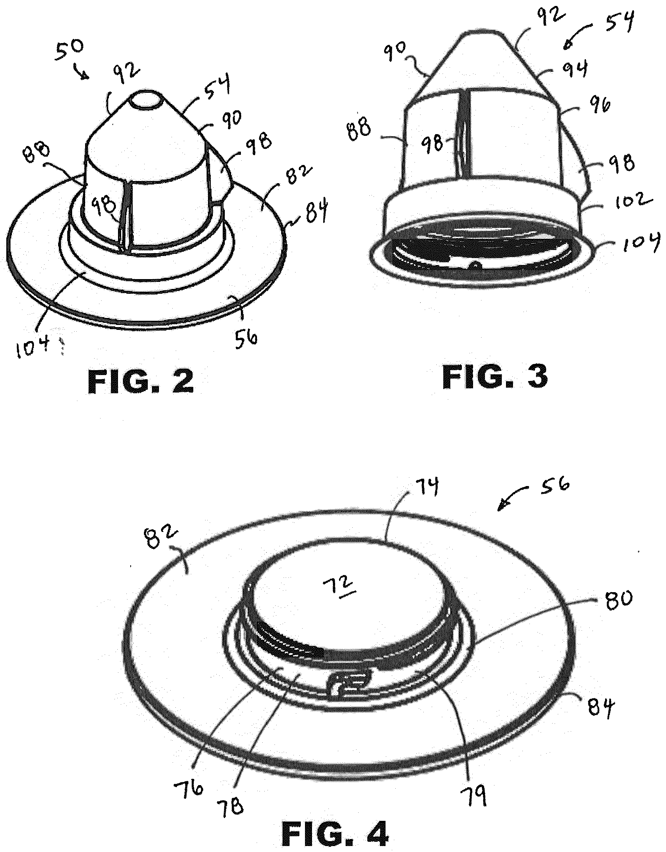

### Example end cap arrangement, FIGS. 2-10

In reference now to FIGS. 2-10, a first embodiment of end cap arrangement 50 is shown. FIG. 2 shows a perspective view of the end cap arrangement 50, having the tapered end cap 54 releasably coupled to the flat end cap 56. FIG. 3 is a bottom, perspective view of the tapered end cap 54, and FIG. 4 is an upper, perspective view of the flat end cap 56.

In FIG. 4, the flat end cap 56 includes a flat, planar surface 72, perpendicular to the longitudinal axis 35 of the filter media 32. The planar surface 72 is shown to have a round outer perimeter 74. A flat end cap radial wall 76 extends from the perimeter 74 of the planar surface 72 toward the first end cap 52 to form an upright surrounding wall 78. The radial wall 76 has an exterior surface 79.

In this example, the flat end cap 56 includes an end lip 80 surrounding the flat end cap radial wall 76 such that the flat end cap radial wall 76 extends between the planar surface 72 and the end lip 80.

The flat end cap 56 further includes a base plate 82 with and outer periphery 84. The base plate 82 can be flat such that the end lip 80 and flat end cap radial wall 76 project away from the base plate 82 and away from the first end cap 52. The base plate 82 can be secured to and against the first end cap 52.

FIG. 3 shows the tapered end cap 54, which includes a radial wall member 88 surrounding an end piece 90. The end piece 90 has a tapered projection 92. The tapered projection 92 can be any one of a fin, cone, cone-section, or rocket-shape member.

In the non-limiting example shown in FIG. 3, the tapered projection 92 has an upper conical section 94, with a first cylindrical wall 96 extending from the conical section 94 toward the first end cap 52. A plurality of circumferentially spaced fins 98 project radially from the first wall 96. In the example shown, there are 3 fins 98. The fins 98 can help to orient the tapered end cap 54 into the filter housing 24.

Extending from the wall 96 toward the first end cap 52 is a second cylindrical wall 102. The second wall 102 has a larger diameter than the first wall 96.

Circumscribing the second wall 102 at a free, terminal end of the second wall 102 is a sealing member 104. The sealing member 104 is generally a flexible member positioned to press against the flat end cap 56 to form a seal therebetween.

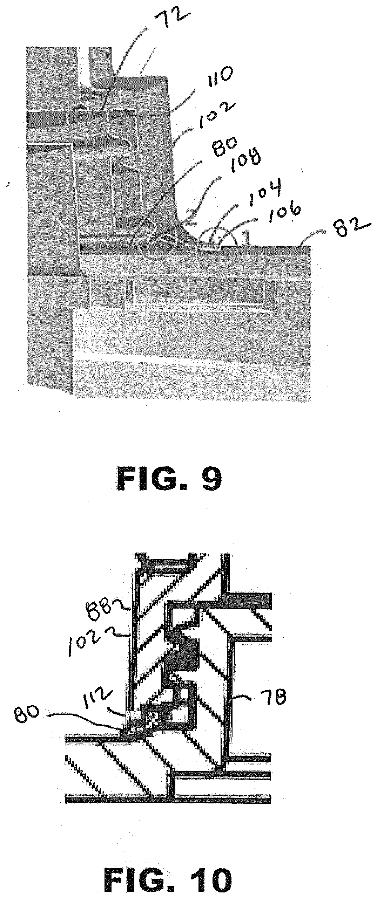

Attention is directed to FIG. 9. In FIG. 9, the sealing member 104 has a bendable tip 106 for preventing leakage inside of the tapered end cap 54. Along an inside surface of the sealing member 104 is an internally projecting inner seal member 108. The inner seal member 108 presses against the end lip 80 of the flat end cap 56 to help prevent leakages inside of the tapered end cap 54.

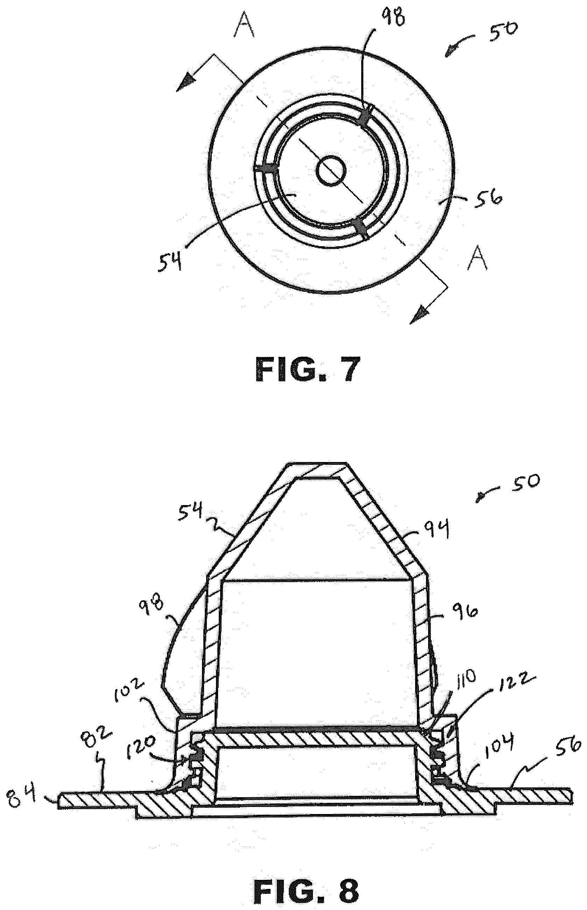

Also shown in FIGS. 8-9 is an inwardly projecting surface 110, extending inwardly between the second wall 102 and the first wall 96 (FIG. 8). The surface 110 engages against the flat planar surface 72 of the flat end cap 56, to help ensure a good match between the flat end cap 56 and the tapered end cap 54.

An alternative embodiment is shown in FIG. 10. In FIG. 10, the releasable seal between the flat end cap 56 and the tapered end cap 54 is formed with a seal tip 112 at the terminal end of the radial wall member 88, in this example, at the end of the second wall 102. The seal tip 112 can be bi-injected and be a soft based rubber-like material, such as EPDM, silicone, etc. The seal tip 112 is positioned to press against the end lip 80 of the flat end cap 56 to form a seal therebetween.

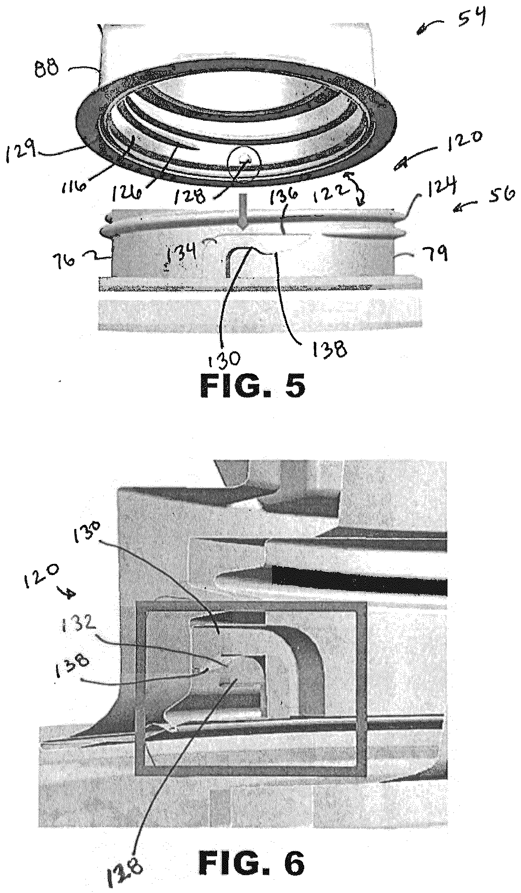

In reference now to FIGS. 5, 6, and 8, the tapered end cap 54 and the flat end cap 56 are releasably coupled together by a coupling arrangement 120. Many embodiments are possible.

In the example shown, the coupling arrangement 120 is between the exterior surface 79 of the radial wall 76 of the flat end cap 56 and an interior surface 116 of the radial wall member 88 of the tapered end cap 54.

The coupling arrangement 120, in the non-limiting example shown, includes a threaded connection 122. Threads 124 are along the exterior surface 79 of the radial wall 76, and mating threads 126 are along the interior surface 116 of the second wall 102 to provide a rotational threaded fit between the tapered end cap 54 and flat end cap 56.

The coupling arrangement 120 can include a projecting lug 128 and a holder 130 engageable upon rotation of the threaded connection 122. The projecting lug 128 includes a radial projection 132 extending from one of the interior surface 116 of the radial wall member 88 and the exterior surface 79 of the flat end cap radial wall 76. The holder 130 includes an L-shaped radial projection 134 extending from the other of the interior surface 116 of the radial wall member 88 and the exterior surface 79 of the flat end cap radial wall 76.

In the example shown in FIG. 5, the projecting lug 128 projects from the interior surface 116 of the second wall 102 of the radial wall member 88. For example, the lug 128 is shown to be along an end rim 129 of the interior surface 116 of the radial wall member 88.

The L-shaped projection 134 extends from the exterior surface 79 of the flat end cap radial wall 76. One end of the L -shaped projection 134 extends from the end lip 80, bends at a generally right angle spaced from the end lip 80, and includes a section 136 generally parallel to the flat planar surface 72. An end of the section 136 includes a projecting hook 138 for engaging the lug 128. See FIG. 6, in which the hook 138 is over the lug 128.

In some examples, the coupling arrangement 120 may include a plurality of either or both projecting lugs 128 and holders 130.

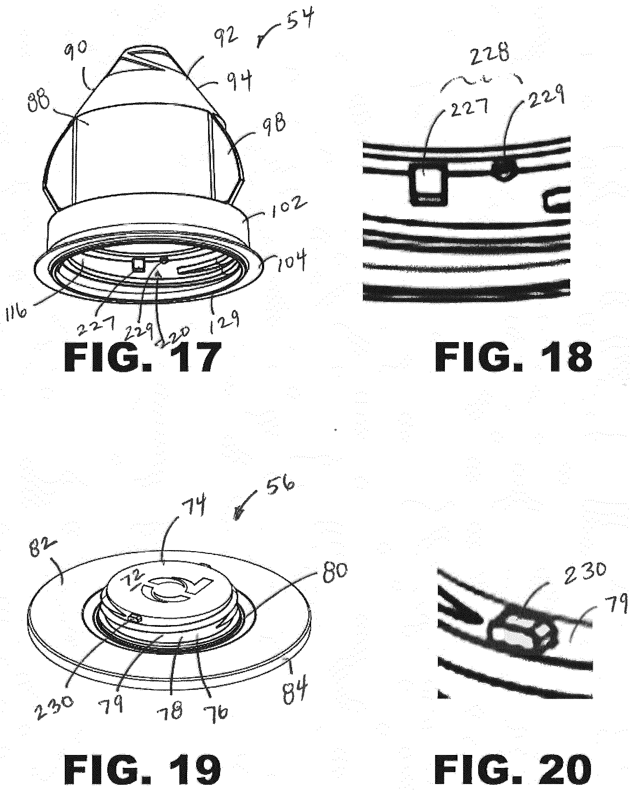

### Example end cap arrangements, FIGS. 17-20 and FIGS. 21-24

In reference now to FIGS. 17-20, a second embodiment of end cap arrangement 50 is shown. FIG. 17 is a bottom, perspective view of the tapered end cap 54, and FIG. 19 is an upper, perspective view of the flat end cap 56. FIGS. 18 and 20 show enlarged views of coupling arrangement 220. The coupling arrangement 220 is similar to the embodiment of FIGS. 2-10, with the difference being the location of the projecting lug 228 and holder 230, as well as the shape of the lug 228 and holder 230. In this embodiment, the lug 228 is spaced away from the end rim 129, and the holder 230 is spaced away from the end lip 80. That is, the lug 228 and holder 230 are located toward the upper part of the coupling arrangement 220 (as contrasted with FIGS. 2-10, where they are toward the bottom or lower part of the coupling arrangement 120), when the end cap arrangement 50 is oriented with the tapered end cap 54 pointing up. Injection molding can be a more convenient and less expensive process with the lug 228 and holder 230 located in the upper part rather than the lower part.

The lug 228 includes a protrusion 229 and a projecting stopper 227 circumferentially spaced apart from each other. The holder 230 is along the exterior surface 79 of the flat end cap radial wall 76. In this example, the holder 230 projects radially outwardly from the exterior surface 79. In use, the holder 230 slides over the protrusion 229 and is stopped from further movement by the stopper 227.

The description of the rest of the second embodiment is as described above and incorporated herein by reference, using the same reference numerals.

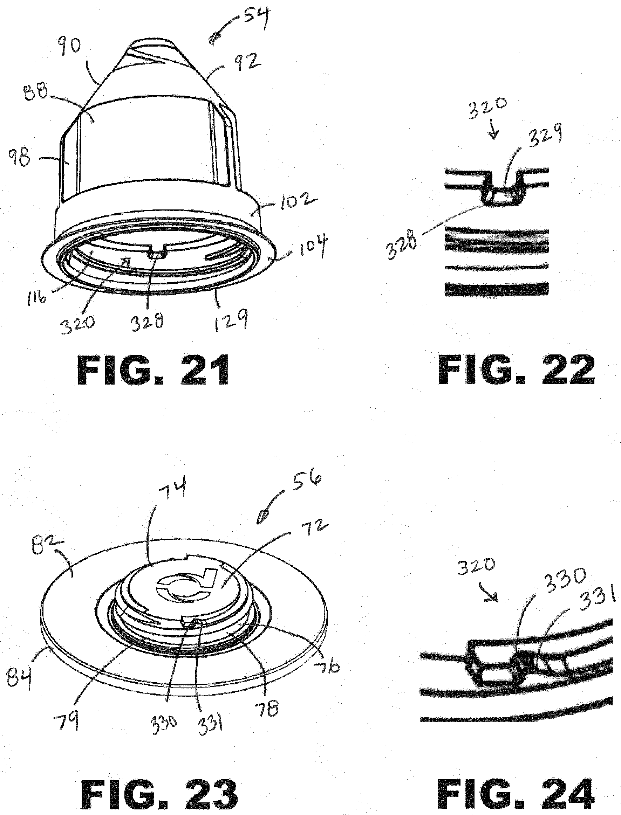

FIGS. 21-24 show a third embodiment of end cap arrangement 50. FIG. 21 is a bottom, perspective view of the tapered end cap 54, and FIG. 23 is an upper, perspective view of the flat end cap 56. FIGS. 22 and 24 show enlarged views of the coupling arrangement 320. The coupling arrangement 320 is located in generally the same position as the embodiment of FIGS. 17-20 (i.e., in the upper part of the coupling arrangement 320, spaced away from the end rim 129 and end lip 80), while the geometry of the lug 328 and holder 330 are somewhat different. In this embodiment, the holder 330 includes a recess 331. The lug 328 includes an axial projection/ protrusion 329, and slides over the holder 330 and into the recess 331.

The description of the rest of the third embodiment is as described above for FIGS. 2-10 and incorporated herein by reference, using the same reference numerals.

In the example embodiments of FIGS. 17-20 and FIGS. 21-24, the lug 228, 328 is along the interior surface 116 of the radial wall member 88, and the holder 230, 330 is along the exterior surface 79 of the flat end cap radial wall 76. In some cases, the holder 330 includes recess 331 within the exterior surface 79 of the flat end cap radial wall.

Optionally, the threaded connection 122 includes threads 126 along the interior surface 116 of the radial wall member 88 between the lug 228, 328 and the end rim 129 of the interior surface 116 of the radial wall member 88. Optionally, the holder 230, 330 is along the flat end cap radial wall 76 adjacent to the flat planar surface 72 and spaced from base plate 82, with threads 124 being between the holder 230, 330 and the base plate 82.

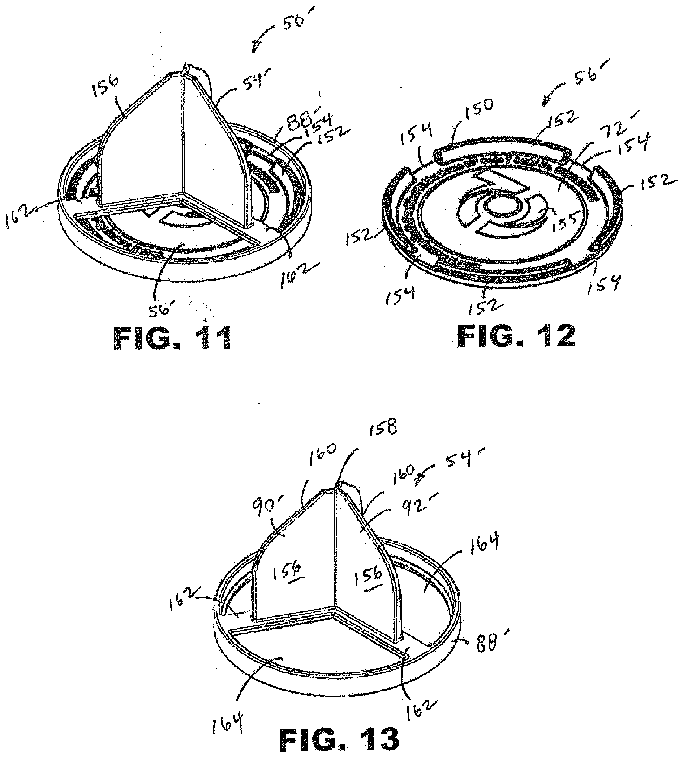

### Example end cap arrangement, FIGS. 11-15

In reference now to FIGS. 11-15, another embodiment of end cap arrangement is illustrated at 50'. FIG. 11 is a perspective view of end cap arrangement 50' having tapered end cap 54' releasably coupled to the flat end cap 56'. FIG. 13 is an upper perspective view of the tapered end cap 54', and FIG. 12 is an upper, perspective view of the flat end cap 56'.

The flat end cap 56' includes flat, planar surface 72', perpendicular to the longitudinal axis 35 of the cylinder 33 of filter media 32. A flat end cap rim 150 extends from perimeter 74' of the planar surface 72' away from the first end cap 52.

The flat end cap rim 150 includes a plurality of rim segments 152 circumferentially spaced from each other with recesses (gaps) 154 therebetween. In the example shown, there are 4 rim segments 152, evenly spaced about the perimeter 74', with one recesses 154 in between two adjacent segments 152. The rim segments 152 circumscribe the planar surface 72' and are angled at a non-zero angle relative to the surface 72', extending away from the first end cap 52 on the first end 34 of the filter media 32.

The flat, planar surface 72' may include ornamentation and/or branding 155 to provide an attractive, eye-catching and distinctive appearance to the flat end cap 56'.

FIG. 13 shows the tapered end cap 54', which includes radial wall member 88' surrounding end piece 90'. The end piece 90' has tapered projection 92'. The tapered projection 92' can be any one of a fin, cone, cone-section, or rocket-shape member.

In the non-limiting example shown in FIG. 3, the tapered projection 92' has a plurality of radially extending fins 156 projecting radially from a centerpoint 158 of the tapered projection 92'. In the example shown, there are 3 fins 156. The fins 156 can help to orient the tapered end cap 54' into the filter housing 24. The fins 156 are each trapezoid shaped, including a slanting edge 160 angled upwardly, as the edge 160 extends from adjacent the radial wall member 88' to the centerpoint 158.

The tapered end cap 54' further includes a plurality of circumferentially spaced connecting sections 162 extending between the tapered projection 92' and the tapered end cap radial wall member 88'. The connecting sections 162 join or connect a base of each of the fins 156 to the radial wall member 88'.

Spaced between adjacent connecting sections 162 are openings 164. The openings 164 allow for drainage of any moisture from the tapered end cap 54' to the flat end cap 56'.

The tapered end cap 54' is constructed and arranged to removably attach to the flat end cap 56'. In examples, the radial wall member 88' of the tapered end cap 54' is sized to rotate or snap fit over the flat end cap rim 150.

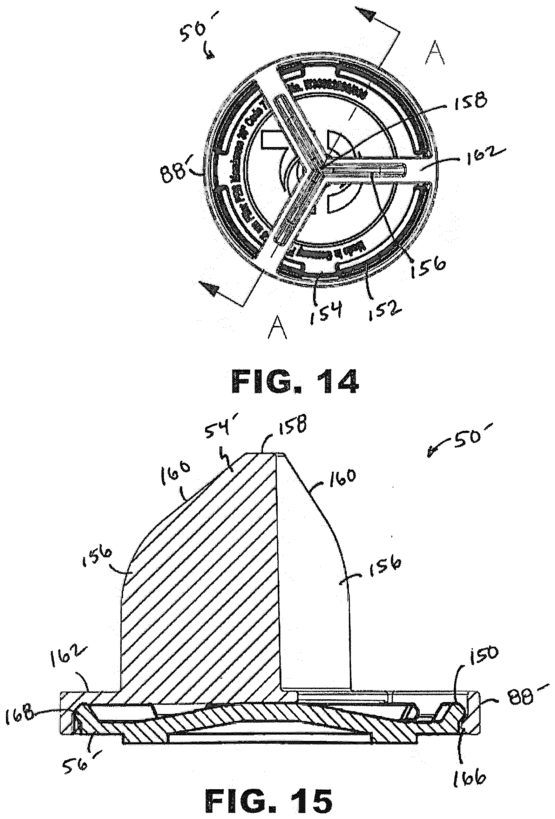

Attention is directed to the embodiment of FIG. 15, showing a cross-section of the end cap arrangement 50'. In this non-limiting example, the tapered end cap radial wall member 88' has a radially inward protuberance 166. The flat end cap rim 150 has a radially outward projection 168. The radially inward protuberance 166 of the tapered end cap 54' snaps over the radially outward projection 168 of the flat end cap 56'.

### Example Methods of Use

The above parts and assemblies can be used in a method of converting an end cap arrangement on a filter element. For example, the method can be used for end cap arrangement 50, 50' on filter element 30.

The method includes providing filter element 30 having filter media 32 with opposite first 34 and second 36 ends, in which end cap arrangement 50, 50'secured to the first end 34. The method includes selectively converting the end cap arrangement 50, 50' from tapered end cap 54, 54' to flat end cap 56, 56', and from the flat end cap 56, 56' to the tapered end cap 54, 54'.

The step of selectively converting includes releasably coupling the tapered end cap 54, 54' to the flat end cap 56, 56'.

The step of selectively converting can include using threaded connection 122 between the tapered end cap 54 and flat end cap 56.

The step of selectively converting can include using lug 128 and holder 130 engageable upon rotation of the threaded connection 122.

The method can further include forming a seal between the tapered end cap 54 and flat end cap 56. This may involve using sealing member 104 and/or surface 110 on the flat end cap 56; or, using seal tip 112 on the flat end cap 56.

The step of selectively converting can include using a snap-fit connection between the tapered end cap 54' and flat end cap 56'.

### Reference numbers

- 20: assembly
- 22: base
- 24: housing
- 26: inlet
- 28: outlet
- 30: filter element
- 32: filter media
- 33: cylinder
- 34: first end
- 35: longitudinal axis
- 36: second end
- 38: pleated media
- 40: cage
- 42: openings
- 50, 50': end cap arrangement
- 52, 52': first end cap
- 54, 54': tapered end cap
- 56, 56': flat end cap
- 60: second end cap
- 62: open end cap
- 64: seal members
- 72, 72': flat planar surface
- 74, 74': perimeter
- 76: flat end cap radial wall
- 78: upright surrounding wall
- 79: exterior surface of radial wall
- 80: end lip of flat end cap
- 82: base plate
- 84: outer periphery
- 88, 88': radial wall member
- 90, 90': end piece
- 92, 92': tapered projection
- 94: conical section
- 96: first cylindrical wall
- 98: fins
- 102: second wall
- 104: sealing member
- 106: tip
- 108: inner seal member
- 110: surface
- 112: seal tip
- 116: interior surface
- 120: coupling arrangement
- 122: threaded connection
- 124: threads on 76
- 126: threads on 79
- 128: lug
- 129: end rim
- 130: holder
- 132: radial projection
- 134: L- shaped radial projection
- 136: section
- 138: hook
- 150: flat end cap rim
- 152: rim segment
- 154: recess
- 155: ornamentation
- 156: fins
- 158: centerpoint
- 160: edge
- 162: connecting section
- 164: opening
- 166: protuberance
- 168: projection
- 220: coupling arrangement
- 227: stopper
- 228: lug
- 229: protrusion
- 230: holder
- 320: coupling arrangement
- 328: lug
- 329: axial projection / protrusion
- 330: holder
- 331: recess

## Claims

1. A filter element (30) comprising:
(a) filter media (32) having opposite first and second ends (34, 36); the filter media (32) including a cylindrical tube (33) having a central longitudinal axis;
(b) an end cap arrangement (50, 50') includes a first end cap (52,52') secured to the first end (34); the end cap arrangement selectively convertible from a tapered end cap (54, 54') to a flat end cap (56, 56'), and from the flat end cap (56, 56') to the tapered end cap (54, 54');
(i) wherein the tapered end cap (54, 54') includes a radial wall member (88, 88') surrounding an end piece (90, 90'); the end piece (90, 90') having a tapered projection (92, 92') extending away from the rest of the filter element;
(ii) the flat end cap (56, 56') includes a flat, planar surface (72, 72'), perpendicular to the longitudinal axis; and a flat end cap radial wall (76) extending from a perimeter of the planar surface (72, 72') toward the first end cap (52, 52');
(c) a second end cap (60) secured to the second end (36); the second end cap being an open end cap; **characterized in that**:
the end cap arrangement (50, 50') includes the flat end cap (56, 56') secured to the first end cap (52, 52'), and the tapered end cap (54, 54') releasably coupled to the flat end cap (56, 56').

2. The filter element of claim 1 wherein the flat end cap (56, 56') includes an end lip (80) surrounding the flat end cap radial wall (76) such that the flat end cap radial wall (76) extends between the planar surface (72, 72') and the end lip (80).

3. The filter element of claim 2 wherein:
(a) the flat end cap (56, 56') further includes a base plate (82) with an outer periphery (84); the end lip (80) and flat end cap radial wall (76) projecting away from the base plate (82); and
(b) the base plate (82) is secured to and against the first end cap (52, 52').

4. The filter element of claim 1 wherein:
(a) the flat end cap radial wall (76) has an exterior surface (79);
(b) the radial wall member (88, 88') of the tapered end cap (54, 54') has an interior surface (116); and
(c) the tapered end cap (54, 54') is releasably coupled to the flat end cap (56, 56') by a coupling arrangement (120) between the exterior surface (79) of the flat end cap radial wall (76) and the interior surface (116) of the tapered end cap (54, 54').

5. The filter element of claim 4 wherein the coupling arrangement (120) includes a threaded connection (122) and a lug (128) and a holder (130) engageable upon rotation of the threaded connection (122).

6. The filter element of claim 2 wherein the tapered end cap (54, 54') further includes a sealing member (104) at a terminal end of the tapered end cap radial wall member (88, 88'); the sealing member (104) being flexible and positioned to press against the end lip (80) of the flat end cap (56, 56') to form a seal therebetween.

7. The filter element of any one of claim 2, wherein the tapered end cap (54, 54') further includes a seal tip (112) at a terminal end of the tapered end cap radial wall member (88, 88'); the seal tip (112) being a rubber-like material and positioned to press against the end lip (80) of the flat end cap (56, 56') to form a seal therebetween.

8. The filter element of claim 1 wherein:
(a) the filter media (32) includes a cylindrical tube (33) having a central longitudinal axis; and
(b) the flat end cap (52, 52') includes a flat, planar surface (72, 72'), perpendicular to the longitudinal axis; and a flat end cap rim (150) extending from a perimeter (74, 74') of the planar surface (72, 72') away from the first end cap (52, 52').

9. The filter element of claim 1, wherein the tapered end cap (54, 54') further includes a plurality of circumferentially spaced connecting sections (162) extending between the tapered projection (92, 92') and the tapered end cap radial wall member (88, 88').

10. A method of converting an end cap arrangement (50, 50') on a filter element (30) according to claim 1; the method comprising:
selectively converting the end cap arrangement (50, 50') from a tapered end cap (54, 54') to a flat end cap (56, 56'), and from the flat end cap (56, 56') to the tapered end cap (54, 54').

11. The method of claim 10 wherein selectively converting includes releasably coupling the tapered end cap (54, 54') to the flat end cap (56, 56').

## Patentansprüche

1. Filterelement (30), das Folgendes umfasst:
(a) ein Filtermedium (32) mit gegenüberliegenden ersten und zweiten Enden (34, 36); wobei das Filtermedium (32) ein zylindrisches Rohr (33) mit einer zentralen Längsachse umfasst;
(b) eine Endkappenanordnung (50, 50') umfassend eine erste Endkappe (52, 52'), die an dem ersten Ende (34) befestigt ist; wobei die Endkappenanordnung wahlweise von einer konischen Endkappe (54, 54') in eine flache Endkappe (56, 56') und von der flachen Endkappe (56, 56') in die konische Endkappe (54, 54') umwandelbar ist;
(i) wobei die konische Endkappe (54, 54') ein radiales Wandelement (88, 88') umfasst, das ein Endstück (90, 90') umgibt; wobei das Endstück (90, 90') einen konischen Vorsprung (92, 92') aufweist, der sich vom Rest des Filterelements weg erstreckt;
(ii) wobei die flache Endkappe (56, 56') eine flache, ebene Oberfläche (72, 72') senkrecht zur Längsachse und eine flache Endkappen-Radialwand (76) aufweist, die sich von einem Umfang der ebenen Oberfläche (72, 72') in Richtung der ersten Endkappe (52, 52') erstreckt;
(c) eine zweite Endkappe (60), die an dem zweiten Ende (36) befestigt ist; wobei die zweite Endkappe eine offene Endkappe ist; **dadurch gekennzeichnet, dass**
die Endkappenanordnung (50, 50') die flache Endkappe (56, 56'), die an der ersten Endkappe (52, 52') befestigt ist, und die konische Endkappe (54, 54') umfasst, die lösbar mit der flachen Endkappe (56, 56') verbunden ist.

2. Filterelement nach Anspruch 1, wobei die flache Endkappe (56, 56') eine Endlippe (80) umfasst, die die flache Endkappenradialwand (76) so umgibt, dass sich die flache Endkappen-Radialwand (76) zwischen der ebenen Fläche (72, 72') und der Endlippe (80) erstreckt.

3. Filterelement nach Anspruch 2, wobei:
(a) die flache Endkappe (56, 56') ferner eine Bodenplatte (82) mit einem Außenumfang (84) umfasst; die Endlippe (80) und die flache Endkappen-Radialwand (76) von der Bodenplatte (82) wegragen; und
(b) die Grundplatte (82) an der ersten Endkappe (52, 52') und gegen diese befestigt ist.

4. Filterelement nach Anspruch 1, wobei:
(a) die flache Endkappen-Radialwand (76) eine Außenfläche (79) aufweist;
(b) das radiale Wandelement (88, 88') der konischen Endkappe (54, 54') eine Innenfläche (116) aufweist; und
(c) die konische Endkappe (54, 54') durch eine Kupplungsanordnung (120) zwischen der Außenfläche (79) der flachen Endkappen-Radialwand (76) und der Innenfläche (116) der konischen Endkappe (54, 54') lösbar mit der flachen Endkappe (56, 56') verbunden ist.

5. Filterelement nach Anspruch 4, wobei die Kupplungsanordnung (120) eine Gewindeverbindung (122) und einen Ansatz (128) sowie einen Halter (130) umfasst, der bei Drehung der Gewindeverbindung (122) in Eingriff bringbar ist.

6. Filterelement nach Anspruch 2, wobei die konische Endkappe (54, 54') ferner ein Dichtungselement (104) an einem Abschlussende des radialen Wandelements (88, 88') der konischen Endkappe umfasst; wobei das Dichtungselement (104) flexibel ist und so positioniert ist, dass es gegen die Endlippe (80) der flachen Endkappe (56, 56') drückt, um eine Dichtung zwischen diesen zu bilden.

7. Filterelement nach einem der Ansprüche 2, wobei die konische Endkappe (54, 54') ferner eine Dichtungsspitze (112) an einem Abschlussende des radialen Wandelements (88, 88') der konischen Endkappe umfasst; wobei die Dichtungsspitze (112) aus einem gummiartigen Material besteht und so positioniert ist, dass sie gegen die Endlippe (80) der flachen Endkappe (56, 56') drückt, um dazwischen eine Abdichtung zu bilden.

8. Filterelement nach Anspruch 1, wobei:
(a) das Filtermedium (32) ein zylindrisches Rohr (33) mit einer zentralen Längsachse umfasst; und
(b) die flache Endkappe (52, 52') eine flache, ebene Oberfläche (72, 72') senkrecht zur Längsachse aufweist; und einen flachen Endkappenrand (150), der sich von einem Umfang (74, 74') der ebenen Oberfläche (72, 72') weg von der ersten Endkappe (52, 52') erstreckt.

9. Filterelement nach Anspruch 1, wobei die konische Endkappe (54, 54') ferner mehrere in Umfangsrichtung beabstandete Verbindungsabschnitte (162) umfasst, die sich zwischen dem konischen Vorsprung (92, 92') und dem radialen Wandelement (88, 88') der konischen Endkappe erstrecken.

10. Verfahren zum Umwandeln einer Endkappenanordnung (50, 50') an einem Filterelement (30) gemäß Anspruch 1, wobei das Verfahren umfasst:
selektives Umwandeln der Endkappenanordnung (50, 50') von einer konischen Endkappe (54, 54') in eine flache Endkappe (56, 56') und von der flachen Endkappe (56, 56') in die konische Endkappe (54, 54').

11. Verfahren nach Anspruch 10, wobei das selektive Umwandeln das lösbare Verbinden der konischen Endkappe (54, 54') mit der flachen Endkappe (56, 56') umfasst.

## Revendications

1. Élément filtrant (30) comprenant :
(a) un matériau filtrant (32) ayant des première et deuxième extrémités (34, 36) opposées ; le matériau filtrant (32) comprenant un tube cylindrique (33) ayant un axe longitudinal central ;
(b) un arrangement d'embouts (50, 50') comprenant un premier embout (52, 52') fixé à la première extrémité (34) ; l'arrangement d'embout pouvant être transformé sélectivement d'un embout conique (54, 54') en un embout plat (56, 56'), et de l'embout plat (56, 56') en l'embout conique (54, 54') ;
(i) l'embout conique (54, 54') comprenant un élément de paroi radiale (88, 88') entourant une pièce d'extrémité (90, 90') ; la pièce d'extrémité (90, 90') comprenant une projection conique (92, 92') qui s'étend à l'opposé du reste de l'élément filtrant ;
(ii) l'embout plat (56, 56') comprenant une surface plane plate (72, 72'), perpendiculaire à l'axe longitudinal ; et une paroi radiale d'embout plat (76) s'étendant depuis un périmètre de la surface plane (72, 72') vers le premier embout (52, 52') ;
(c) un deuxième embout (60) fixé à la deuxième extrémité (36) ; le deuxième embout étant un embout ouvert ; **caractérisé en ce que** :
l'arrangement d'embouts (50, 50') comprend l'embout plat (56, 56') fixé au premier embout (52, 52'), et l'embout conique (54, 54') couplé de manière amovible à l'embout plat (56, 56').

2. Élément filtrant selon la revendication 1, l'embout plat (56, 56') comprenant une lèvre d'extrémité (80) qui entoure la paroi radiale de l'embout plat (76) de sorte que la paroi radiale de l'embout plat (76) s'étend entre la surface plane (72, 72') et la lèvre d'extrémité (80).

3. Élément filtrant selon la revendication 2,
(a) l'embout plat (56, 56') comprenant en outre une plaque de base (82) avec une périphérie extérieure (84) ; la lèvre d'extrémité (80) et la paroi radiale d'embout plat (76) faisant saillie à l'écart de la plaque de base (82) ; et
(b) la plaque de base (82) étant fixée au premier embout (52, 52') et contre lui.

4. Élément filtrant selon la revendication 1,
(a) la paroi radiale de l'embout plat (76) possédant une surface extérieure (79) ;
(b) l'élément de paroi radiale (88, 88') de l'embout conique (54, 54') possédant une surface intérieure (116) ; et
(c) l'embout conique (54, 54') étant couplé de manière amovible à l'embout plat (56, 56') par un arrangement de couplage (120) entre la surface extérieure (79) de la paroi radiale de l'embout plat (76) et la surface intérieure (116) de l'embout conique (54, 54').

5. Élément filtrant selon la revendication 4, l'arrangement de couplage (120) comprenant un raccord fileté (122) ainsi qu'un ergot (128) et un élément de maintien (130) pouvant venir en prise lors de la rotation du raccord fileté (122).

6. Élément filtrant selon la revendication 2, l'embout conique (54, 54') comprenant en outre un élément d'étanchéité (104) à une extrémité terminale de l'élément de paroi radiale (88, 88') de l'embout conique ; l'élément d'étanchéité (104) étant flexible et positionné pour appuyer contre la lèvre d'extrémité (80) de l'embout plat (56, 56') afin de former un joint d'étanchéité entre ceux-ci.

7. Élément filtrant selon l'une quelconque des revendication 2, l'embout conique (54, 54') comprenant en outre une pointe d'étanchéité (112) à une extrémité terminale de l'élément de paroi radiale (88, 88') de l'embout conique ; la pointe d'étanchéité (112) étant en un matériau semblable à du caoutchouc et positionnée de manière à appuyer contre la lèvre d'extrémité (80) de l'embout plat (56, 56') afin de former un joint d'étanchéité entre ceux-ci.

8. Élément filtrant selon la revendication 1,
(a) le matériau filtrant (32) comprenant un tube cylindrique (33) ayant un axe longitudinal central ; et
(b) l'embout plat (52, 52') comprenant une surface plane et plate (72, 72'), perpendiculaire à l'axe longitudinal ; et un rebord d'embout plat (150) s'étendant à partir d'un périmètre (74, 74') de la surface plane (72, 72') à l'écart du premier embout (52, 52').

9. Élément filtrant selon la revendication 1, l'embout conique (54, 54') comprenant en outre une pluralité de sections de connexion (162) espacées circonférentiellement qui s'étendent entre la projection conique (92, 92') et l'élément de paroi radiale (88, 88') de l'embout conique.

10. Procédé de conversion d'un arrangement d'embouts (50, 50') sur un élément filtrant (30) selon la revendication 1 ; le procédé comprenant :
transformer sélectivement l'arrangement d'embouts (50, 50') d'un embout conique (54, 54') en un embout plat (56, 56'), et de l'embout plat (56, 56') en l'embout conique (54, 54').

11. Procédé selon la revendication 10, la transformation sélective consistant à coupler de manière amovible l'embout conique (54, 54') à l'embout plat (56, 56').
